# EUROPEAN PATENT APPLICATION

(11) **EP 4 727 049 A1**
(43) Date of publication of application: **15.04.2026**
(21) Application number: 23940132.6
(22) Date of filing: 08.06.2023
(51) Int. Cl.: H04L 5/00

(54) **METHOD FOR CONFIGURING REFERENCE SIGNAL, APPARATUS, AND STORAGE MEDIUM**

(71) Applicant: Beijing Xiaomi Mobile Software Co., Ltd., Beijing 100085 (CN)
(72) Inventor: CHI, Liangang, Beijing 100085 (CN); DUAN, Gaoming, Beijing 100085 (CN)
(74) Representative: Dehns Germany Partnerschaft mbB
(86) International application number: PCT/CN2023/099234
(87) International publication number: WO 2024/250246

(57) **Abstract**

The present disclosure provides a method for configuring a reference signal, an apparatus, and a storage medium. The method comprises: sending at least one set of configuration information to a terminal, wherein the configuration information is used for configuring a reference signal in an orthogonal time frequency space (OTFS) system. The method for configuring a reference signal provided in the present disclosure can be used to configure a reference signal in an MIMO-OTFS system, so as to implement transmission and measurement of the reference signal in the MIMO-OTFS system, thereby ensuring successful execution of related measurement (such as measurement of channel quality) in the MIMO-OTFS system.

## Description

### TECHNICAL FIELD

The disclosure relates to the field of communication technology, and in particular to methods for configuring a reference signal, devices and a storage medium.

### BACKGROUND

With the large-scale development of high-speed railways and the increasing popularity of highway vehicle communications, wireless communication systems in high-speed mobile environments have attracted more and more attention in the field. In high-speed mobile environments, due to the high terminal movement speed, wireless communications generally suffer from problems such as fast time-varying fading, Doppler shift and Doppler spread. In order to overcome the above problems, the Orthogonal Time Frequency and Space (OTFS) communication system is introduced. OTFS is a two-dimensional modulation scheme that performs the modulation in a delay-Doppler (DD) domain. Through a series of two-dimensional transformations, the dual-dispersion channel is converted into a channel that is approximately non-fading in the DD domain, which may achieve more significant performance gains. In addition, in the communication system, multiple input multiple output (MIMO) multi-antenna technology may make full use of spatial resources and greatly improve the spectrum efficiency of the wireless communication system. Therefore, the MIMO-OTFS system has broad application prospects in the field of communications.

However, how to configure reference signals in the MIMO-OTFS system is a technical problem that needs to be solved urgently.

### SUMMARY

The disclosure provides methods for configuring a reference signal, devices and a storage medium.

In a first aspect, embodiments of the disclosure provide a method for configuring a reference signal, including:
sending at least one set of configuration information to a terminal, in which the configuration information is used for configuring at least one reference signal in an orthogonal time frequency and space (OTFS) system.

In a second aspect, embodiments of the disclosure provide a method for configuring a reference signal, including:
receiving at least one set of configuration information sent by a network device, in which the configuration information is used for configuring at least one reference signal in an orthogonal time frequency and space (OTFS) system.

In a third aspect, embodiments of the disclosure provide a communication device, including:
a transceiver module, configured to send at least one set of configuration information to a terminal, in which the configuration information is used for configuring at least one reference signal in an orthogonal time frequency and space (OTFS) system.

In a fourth aspect, embodiments of the disclosure provide a communication device, including:
a transceiver module, configured to receive at least one set of configuration information sent by a network device, in which the configuration information is used for configuring at least one reference signal in an orthogonal time frequency and space (OTFS) system.

In a fifth aspect, embodiments of the disclosure provide a communication device. The communication device includes a processor. When the processor calls a computer program in a memory, the method according to any one of the first aspect or the second aspect mentioned above is performed.

In a sixth aspect, embodiments of the disclosure provide a communication device. The communication device includes a processor and an interface circuit. The interface circuit is configured to receive code instructions and transmit the code instructions to the processor. The processor is configured to run the code instructions to enable the device to perform the method according to any one of the first aspect or the second aspect mentioned above.

In a seventh aspect, embodiments of the disclosure provide a communication system. The communication system includes the communication device according to any one of the third aspect or the fourth aspect, the communication system includes the communication device according to the fifth aspect, or the communication system includes the communication device according to the sixth aspect.

In an eighth aspect, embodiments of the invention provide a computer-readable storage medium having instructions usable by the above-mentioned network device stored thereon. When the instructions are executed, the terminal is caused to perform the method according to any one of the first aspect or the second aspect mentioned above.

In a ninth aspect, the disclosure further provides a computer program product including a computer program. When the computer program is executed on a computer, a computer is caused to perform the method according to any one of the first aspect or the second aspect mentioned above.

In a tenth aspect, the disclosure provides a chip system. The chip system includes at least one processor and an interface, and is used to support a network device to implement the functions involved in the method according to any one of the first aspect or the second aspect, for example, determining or processing at least one of the data and information involved in the above method. In a design, the chip system also includes a memory. The memory is configured to store computer programs and data necessary for source nodes or auxiliary nodes. The chip system may be composed of a chip, or may include a chip and other discrete devices.

In an eleventh aspect, the disclosure provides a computer program. When the computer program is executed on a computer, a computer is enabled to perform the method according to any one of the first aspect or the second aspect mentioned above.

### BRIEF DESCRIPTION OF THE DRAWINGS

The above and/or additional aspects and advantages of the disclosure are become apparent and easily understood from the following description of the embodiments in conjunction with the accompanying drawings.
FIG. 1 is a schematic diagram illustrating an architecture of a communication system according to an embodiment of the disclosure.
FIG. 2A is a schematic flowchart illustrating a method for configuring a reference signal according to an embodiment of the disclosure.
FIG. 2B is a schematic diagram illustrating the structure of an orthogonal time frequency and space (OTFS) frame according to an embodiment of the disclosure.
FIG. 2C is a schematic diagram illustrating the structure of a first-type guard interval symbol according to an embodiment of the disclosure.
FIG. 2D is a schematic diagram illustrating the structure of a second-type guard interval symbol according to an embodiment of the disclosure.
FIG. 2E is a schematic diagram illustrating the structure of a second-type guard interval symbol according to an embodiment of the disclosure.
FIG. 3 is a schematic flowchart illustrating a method for configuring a reference signal according to yet another embodiment of the disclosure.
FIG. 4 is a schematic flowchart illustrating a method for configuring a reference signal according to yet another embodiment of the disclosure.
FIG. 5 is a schematic flowchart illustrating a method for configuring a reference signal according to yet another embodiment of the disclosure.
FIG. 6 is a schematic diagram illustrating the structure of a communication device according to yet another embodiment of the disclosure.
FIG. 7 is a schematic diagram illustrating the structure of a communication device according to yet another embodiment of the disclosure.
FIG. 8 is a schematic diagram illustrating the structure of a communication device according to an embodiment of the application.
FIG. 9 is a schematic diagram illustrating the structure of a chip according to an embodiment of the disclosure.

### DETAILED DESCRIPTION

Embodiments are described in detail herein, examples of which are shown in the accompanying drawings. When the following description refers to the drawings, unless otherwise indicated, the same numbers in different drawings represent the same or similar elements. The implementations described in the following embodiments do not represent all implementations consistent with the embodiments of the disclosure. Instead, they are merely examples of devices and methods consistent with some aspects of embodiments of the disclosure as detailed in the appended claims.

The terms used in embodiments are only for the purpose of describing specific embodiments and are not intended to limit the embodiments. The singular forms of "a", "an" and "the" used in the embodiments and the appended claims are also intended to include plural forms unless the context clearly indicates other meanings. It should also be understood that the term "and/or" used herein means and includes any or all possible combinations of one or more associated listed items.

It should be understood that although the terms "first", "second", "third", etc. may be used to describe various information in the embodiments, these information should not be limited to these terms. These terms are only used to distinguish signals of the same type from each other. For example, without departing from the scope of embodiments of the disclosure, the "first information" may also be referred to as the "second information", and similarly, the "second information" may also be referred to as the "first information". Depending on the context, the words "if' as used herein may be interpreted as "at the time of', "when" or "in response to determining".

Embodiments of the disclosure are described in detail below, and examples of the embodiments are shown in the accompanying drawings, where the same or similar reference numerals throughout represent the same or similar elements. The embodiments described below with reference to the accompanying drawings are illustrative and are intended to be used to explain the disclosure, and cannot be understood as limiting the disclosure.

In order to better understand the methods for configuring a reference signal according to embodiments of the disclosure, a communication system to which the embodiments of the disclosure are applicable is first described below.

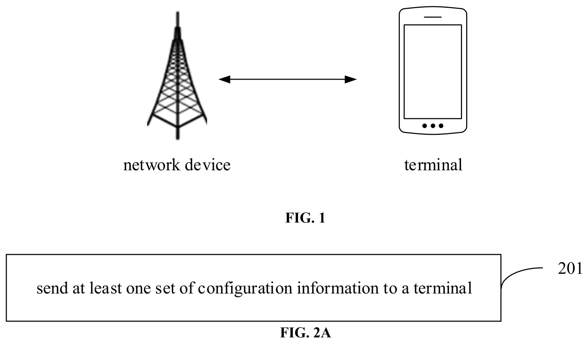

FIG. 1 is a schematic diagram illustrating the architecture of a communication system according to an embodiment of the disclosure. The communication system may include, but is not limited to, a network device and a terminal. In an example, the number and form of devices illustrated in FIG. 1 are used for example and do not constitute a limitation on embodiments of the disclosure. In actual applications, one or more network devices or one or more terminals may be included. In an example, the communication system illustrated in FIG. 1 includes one network device and one terminal as an example.

It should be noted that the technical solutions of embodiments of the disclosure may be applied to various communication systems, such as long term evolution (LTE) system, fifth generation (5G) mobile communication system, 5G new radio (NR) system, or other future new mobile communication systems.

The "terminal" in embodiments of the disclosure may be an entity on the user side for receiving or transmitting signals, such as a mobile phone. It may also be referred to as a terminal device, user equipment (UE), mobile station (MS), mobile terminal device (MT), etc. The terminal may be a vehicle with communication function, a smart vehicle, a mobile phone, a wearable device, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home. Embodiments of the disclosure do not limit the specific technology and specific device form adopted by the terminal.

The "network device" in embodiments of the disclosure may be an entity on the network side for transmitting or receiving signals. For example, the network device may be an evolved NodeB (eNB), a transmission reception point (TRP), a next generation NodeB (gNB) in an NR system, a base station in other future mobile communication systems, or an access node in a wireless fidelity (Wi-Fi) system. Embodiments of the disclosure do not limit the specific technology and specific device form adopted by the network device. The network device according to embodiments of the disclosure may be composed of a centralized unit (CU) and a distributed unit (DU). The CU may also be referred to as a control unit. The CU-DU structure may be used to split the protocol layer of the network device, such as the base station, such that the functions of some protocol layers are placed in the CU for centralized control, and the functions of the remaining part or all of the protocol layers are distributed in the DU. The DU is centrally controlled by the CU.

It may be understood that the communication system according to embodiments of the disclosure is for the purpose of more clearly illustrating the technical solution of embodiments of the disclosure and does not constitute a limitation on the technical solution according to embodiments of the disclosure. A person skilled in the art may know that with the evolution of the system architecture and the emergence of new business scenarios, the technical solution according to embodiments of the disclosure is also applicable to similar technical problems.

In addition, in order to facilitate understanding of embodiments of the disclosure, the following explanations are provided.

First, in the disclosure, in the absence of contradiction, each step in any implementation mode or example may be implemented as an independent example, and the steps may be arbitrarily combined. For example, a solution after removing some steps in a certain implementation or example may also be implemented as an independent example, and the order of the steps in a certain implementation or example may be arbitrarily exchanged. In addition, the optional methods or optional examples in a certain implementation or example may be arbitrarily combined. Furthermore, various implementations or examples may be arbitrarily combined. For example, some or all steps of different implementations or examples may be arbitrarily combined, and a certain implementation or example may be arbitrarily combined with the optional methods or optional examples of other implementations or examples.

Second, regarding the descriptions in the disclosure such as "A or B", "A and/or B", "at least one of A and B", "in one case, performing A, in another case, performing B", "in response to one case, performing A, in response to another case, performing B", etc., at least one of the following schemes may be included according to the situation: performing A independently of B (that is, performing A in some embodiments); performing B independently of A (that is, performing B in some embodiments); selectively performing A and B (that is, selecting one from A and B to perform in some embodiments); performing both A and B (that is, performing A and B in some embodiments).

Third, each element, each row, or each column in the table involved in the disclosure may be implemented as an independent embodiment, and the combination of any element, any row, and any column may also be implemented as an independent embodiment.

Fourth, in some implementations or examples, "including A", "comprising A", "used for indicating A", and "carrying A" in the disclosure may be interpreted as directly carrying A or indirectly indicating A.

Fifth, in some implementations or examples, "in response to ...", "in the case of ...", "at the time of ...", "when ...", and "if ..." in the disclosure may be replaced with each other.

The methods for configuring a reference signal, devices and a storage medium according to embodiments of the disclosure are described in detail below with reference to the accompanying drawings.

FIG. 2A is a flowchart illustrating a method for configuring a reference signal according to an embodiment of the disclosure. The method is performed by a network device. As illustrated in FIG. 2A, the method for configuring a reference signal may include the following.

At step 201, at least one set of configuration information is sent to a terminal.

In some embodiments, the configuration information may be used for configuring at least one reference signal in an Orthogonal Time Frequency and Space (OTFS) system.

In some embodiments, the reference signal may be, for example, a channel-state information reference signal (CSI-RS).

In some embodiments, the configuration information may include at least one of: first information or second information.

The first information is used for indicating one or more delay-Doppler (DD) domain positions of one or more reference signals of one or more antenna ports (such as CSI-RS ports).

The second information is used for indicating sequence information of one or more reference signals of one or more antenna ports, the sequence information is used for determining a reference signal sequence corresponding to an antenna port. In some examples, the reference signal sequence is used by the terminal to measure a respective reference signal of the antenna port.

The first information and the second information mentioned above are introduced in detail below.

In some examples, the first information may include at least one of: first position information, second position information, or third position information.

The first position information is used for indicating an OTFS frame where the reference signal is located.

The second position information is used for indicating a position of a reference signal in an OTFS frame.

The third position information is used for indicating positions and/or a count of symbols used for a guard interval in an OTFS frame.

In some examples, the first position information may include a first value N and a second value M, where N and M are both integers. In some examples, the first value N may indicate a period between OTFS frames for carrying the reference signal, and the second value M may indicate an offset value of the OTFS frame for carrying the reference signal within the period N. In some examples, a frame number of the OTFS frame for carrying the reference signal may be determined based on the first value N and the second value M, where n satisfying (n-M) mod N = 0 is the frame number of the OTFS frame for carrying the reference signal, and n is a non-negative integer.

For example, assuming that the first value N is 4 and the second value M is 3, the frame number of the OTFS frame for carrying the reference signal (or referred to as the OTFS frame where the reference signal is located) may be 3, 7, 11 ... and so on.

In some other embodiments, the first position information may include a bitmap, which may include S bits, where S is a positive integer. The S bits correspond to S periodical OTFS frames respectively, and a bit value carried by the bit in the bitmap is used for indicating whether the corresponding OTFS frame carries a reference signal. In some examples, in a case where the bit value carried by the bit is a third value (such as 1), it indicates that the corresponding OTFS frame is used for carrying the reference signal. In a case where the bit value carried by the bit is a fourth value (such as 0), it indicates that the corresponding OTFS frame is not used for carrying the reference signal.

For example, assuming that the bitmap includes 4 bits, the 4 bits may correspond to 4 periodical OTFS frames respectively. For example, a first bit of the 4 bits may correspond to the 1^{st} OTFS frame, the 5^{th} OTFS frame, the 9^{th} OTFS frames, and so on, a second bit of the 4 bits may correspond to the 2^{nd} OTFS frame, the 6^{th} OTFS frame, the 10^{th} OTFS frame, and so on, a third bit of the 4 bits may correspond to the 3^{rd} OTFS frame, the 7^{th} OTFS frame, the 11^{th} OTFS frame, and so on, and a fourth bit of the 4 bits may correspond to the 4^{th} OTFS frame, the 8^{th} OTFS frame, the 12^{th} OTFS frame, and so on. If the bitmap is {0101}, that is, the second bit and the fourth bit of the bitmap are 1, then it means that the OTFS frames corresponding to the second bit and the fourth bit of the bitmap (i.e. the 2^{nd} OTFS frame, the 6^{th} OTFS frame, the 10^{th} OTFS frame and so on, the 4^{th} OTFS frame, the 8^{th} OTFS frame, the 12^{th} OTFS frame and so on) are used for carrying the reference signal.

In some embodiments, the second position information may include at least one DD domain two-dimensional index. In some examples, the DD domain two-dimensional index may include: a delay domain index and a Doppler domain index. In some examples, the DD domain two-dimensional index may indicate a DD domain position in an OTFS frame. At least one DD domain position indicated by the at least one DD domain two-dimensional index is at least one position of the reference signal in the OTFS frame.

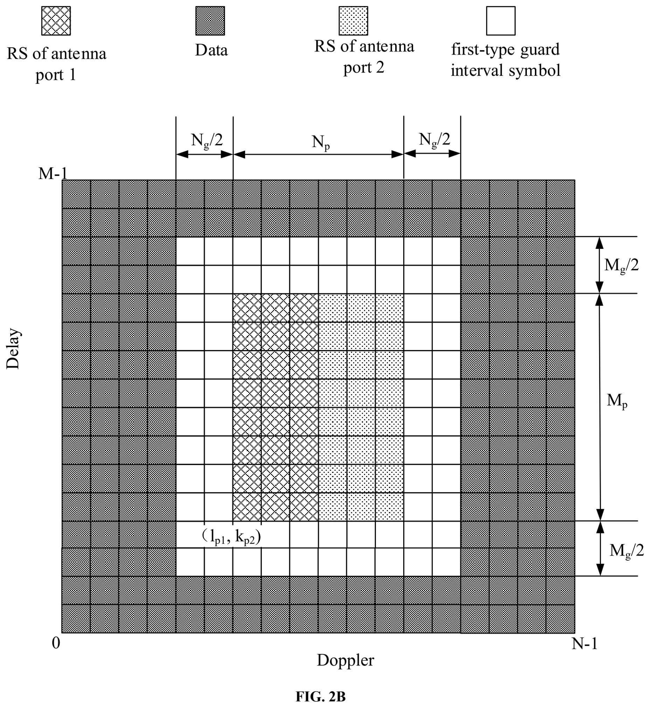

In some examples, FIG. 2B is a schematic diagram illustrating the structure of an OTFS frame according to an embodiment of the disclosure. As illustrated in FIG. 2B, a length of an OTFS frame in the delay domain is M, and a length in the Doppler domain is N. In some examples, the DD domain two-dimensional index may be (lₚ₁, kₚ₂), where lₚ₁ may be a delay domain index, kₚ₂ may be a Doppler domain index, p1 may be equal to 0, 1, 2 ... M, and p2 may be equal to 0, 1, 2 ... N. For example, taking the OTFS frame illustrated in FIG. 2B as an example, the DD domain position in the OTFS frame indicated by the DD domain two-dimensional index (lₚ₁, kₚ₂) is a resource element (RE) in the lₚ₁^{th} row and the kₚ₂^{th} column in FIG. 2B.

In some other embodiments, the second position information may include at least one delay domain index and at least one Doppler domain index. Each delay domain index corresponds to one or more Doppler domain indexes, and/or each Doppler domain index corresponds to one or more delay domain indexes. A delay domain index and a corresponding Doppler domain index form a DD domain two-dimensional index. At least one DD domain position indicated by at least one DD domain two-dimensional index formed by the at least one delay domain index and by the at least one Doppler domain index is at least one position of the reference signal in the OTFS frame.

For example, the second information may include multiple delay domain indexes {l₁, l₂, ...} and multiple Doppler domain indexes {k₁, k₂, ...}, where l₁ may correspond to k₁, forming a DD domain two-dimensional index (l₁, k₁), l₂ may correspond to k₂, forming a DD domain two-dimensional index (l₂, k₂). In this case, the DD domain positions indicated by the DD domain two-dimensional indexes (l₁, k₁) and (l₂, k₂) may be the positions of the reference signals in the OTFS frame. Or l₁ may correspond to k₁ and k₂, forming the DD domain two-dimensional indexes (l₁, k₁) and (l₁, k₂), k₁ may correspond to l₂ and l₃, forming the DD domain two-dimensional indexes (l₂, k₁) and (l₃, k₁). In this case, the DD domain positions indicated by the DD domain two-dimensional indexes (l₁, k₁), (l₁, k₂), (l₂, k₁), and (l₃, k₁) may be the positions of the reference signals in the OTFS frame.

In some embodiments, the above-mentioned third position information may include one first parameter. For example, in a case where the third position information includes one first parameter, the first parameter may be used for indicating a first-type guard interval symbol. For example, the first-type guard interval symbol may be a guard interval symbol shared by reference signals of all antenna ports carried in an OTFS frame. The first-type guard interval symbol may be used for providing a guard interval between reference signals of all antenna ports carried in an OTFS frame and other signals (such as data signals) carried in the OTFS frame. The first parameter may include the count of first-type of guard interval symbols in a delay domain and the count of first-type guard interval symbols in a Doppler domain.

For example, the above-mentioned "the first-type guard interval symbol used for providing the guard interval between the reference signals of all antenna ports carried in the OTFS frame and other signals carried in the OTFS frame" may be understood as: the first-type guard interval symbols surrounding the reference signals of all antenna ports carried in the OTFS frame as a periphery. Based on this, for example, the count of first-type guard interval symbols in the delay domain included in the above-mentioned first parameter may be the total count of first-type guard interval symbols located on both sides of the reference signals in the OTFS frame along a direction of the delay domain, and the count of first-type guard interval symbols in the Doppler domain included in the above-mentioned first parameter may be the total count of first-type guard interval symbols located on both sides of the reference signals in the OTFS frame along a direction of the Doppler domain. Or the count of first-type guard interval symbols in the delay domain included in the above-mentioned first parameter may be the count of first-type guard interval symbols located on either side of the reference signals in the OTFS frame along the direction of the delay domain; and the count of first-type guard interval symbols in the Doppler domain included in the above-mentioned first parameter may be the count of first-type guard interval symbols located on either side of the reference signals in the OTFS frame along the direction of the Doppler domain. For example, in some embodiments, the counts of first-type guard interval symbols located on different sides of the reference signals along the direction of the delay domain or along the direction of the Doppler domain may be the same.

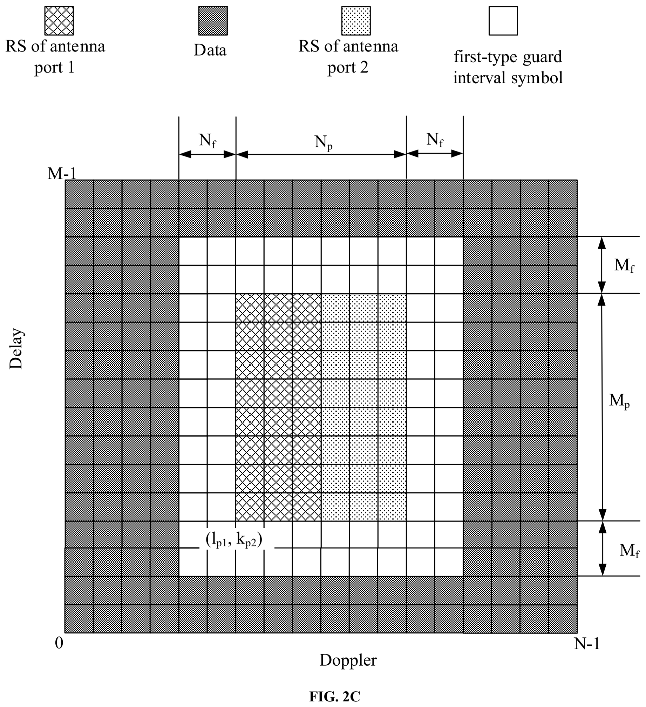

For example, FIG. 2B is a schematic diagram illustrating a first-type guard interval symbol according to an embodiment of the disclosure. As illustrated in FIG. 2B, the OTFS frame carries reference signals of two antenna ports, namely, the reference signal of antenna port 1 and the reference signal of antenna port 2. The first-type guard interval symbol is a guard interval symbol shared by the reference signal of antenna port 1 and the reference signal of antenna port 2. The first-type guard interval symbol separates the reference signals of all antenna ports carried in the OTFS frame (i.e., the reference signal of antenna port 1 and the reference signal of antenna port 2) from other signals carried in the OTFS frame (i.e., the data signal carried in the OTFS frame). The first parameter corresponding to the first-type guard interval symbol in FIG. 2B is (N_{g}, M_{g}), where M_{g} and N_{g} are the counts of the first-type guard interval symbols in the delay domain and in the Doppler domain, respectively. For example, M_{g} is the total count of guard interval symbols on both sides of the reference signals in the OTFS frame along the direction of the delay domain, and N_{g} is the total count of guard interval symbols on both sides of the reference signals in the OTFS frame along the direction of the Doppler domain. In another example, FIG. 2C is a schematic diagram illustrating a first-type guard interval symbol according to an embodiment of the disclosure. As illustrated in FIG. 2C, the first parameter corresponding to the first-type guard interval symbol in FIG. 2C may be (N_{f}, M_{f}), where M_{f} and N_{f} are the counts of first-type guard interval symbols in the delay domain and in the Doppler domain, respectively. Or M_{f} is the count of first-type guard interval symbols located on either side of the reference signals in the OTFS frame along the direction of the delay domain, and N_{f} is the count of first-type guard interval symbols located on either side of the reference signals in the OTFS frame along the direction of the Doppler domain.

For example, in some other embodiments, the above-mentioned third position information may include at least one second parameter. In some examples, in a case where the third position information includes at least one second parameter, different second parameters may correspond to respective reference signals of different antenna ports, and a second parameter is used for indicating a second-type guard interval symbol corresponding to a respective reference signal. The second-type guard interval symbol is a guard interval symbol for a corresponding reference signal. The second-type guard interval symbol is used for providing a guard interval between the respective reference signal of an antenna port corresponding to the second-type guard interval symbol in the OTFS frame and other signals carried in the OTFS frame (such as data signals or reference signals of other antenna ports). The second parameter may include the count of second-type guard interval symbols in the delay domain and the count of second-type guard interval symbols in the Doppler domain.

For example, the above-mentioned "the second-type guard interval symbol used for providing the guard interval between the respective reference signal of the antenna port corresponding to the second-type guard interval symbol in the OTFS frame and other signals carried in the OTFS frame" may be understood as the second-type guard interval symbol surrounding the respective reference signal of the antenna port corresponding to the second-type guard interval symbol as a periphery. Based on this, in some examples, the count of second-type guard interval symbols in the delay domain included in the above-mentioned second parameter may be the total count of second-type guard interval symbols of the antenna port located on both sides of a respective reference signal of the antenna port corresponding to the second parameter along the direction of the delay domain; and the count of second-type guard interval symbols in the Doppler domain included in the above-mentioned second parameter may be the total count of second-type guard interval symbols of the antenna port located on both sides of a respective reference signal of the antenna port corresponding to the second parameter along the direction of the Doppler domain. In other examples, the count of second-type guard interval symbols in the delay domain included in the above-mentioned second parameter may be the count of second-type guard interval symbols of the antenna port located on either side of a respective reference signal of the antenna port corresponding to the second parameter along the direction of the delay domain; and the count of second-type guard interval symbols in the Doppler domain included in the above-mentioned second parameter may be the count of second-type guard interval symbols of the antenna port located on either side of a respective reference signal of the antenna port corresponding to the second parameter along the direction of the Doppler domain. For example, in some embodiments, the counts of second-type guard interval symbols located on different sides of a reference signal along the direction of the delay domain or along the direction of the Doppler domain may be the same.

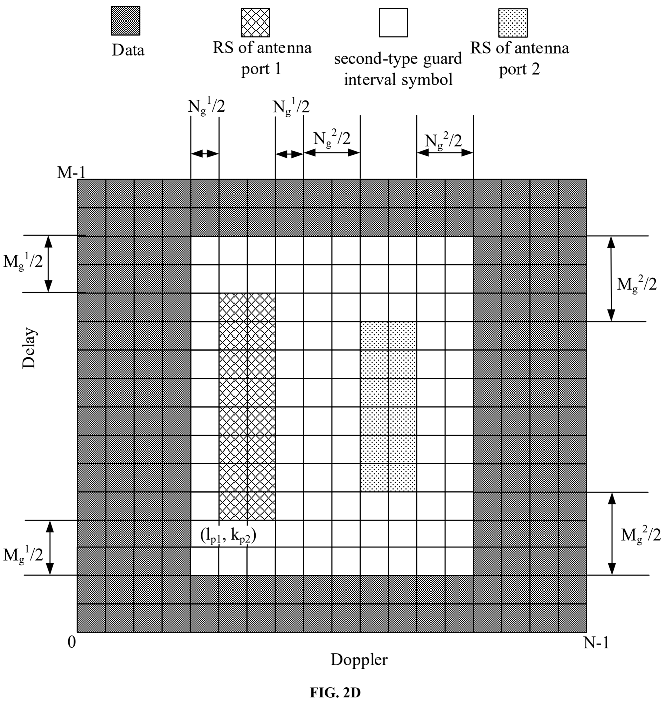

For example, FIG. 2D is a structural diagram illustrating a second-type guard interval symbol according to an embodiment of the disclosure. As illustrated in FIG. 2D, the OTFS frame carries reference signals of two antenna ports, namely, the reference signal of antenna port 1 and the reference signal of antenna port 2. The reference signals of the two antenna ports are separated by different second-type guard interval symbols. Based on this, the above-mentioned "third position information" may include two second parameters, namely, a second parameter (N_{g}¹, M_{g}¹) and a second parameter (N_{g}², M_{g}²). The second parameter (N_{g}¹, M_{g}¹) corresponds to the reference signal of antenna port 1, and the second parameter (N_{g}¹, M_{g}¹) is used for indicating the second-type guard interval symbol corresponding to the reference signal of antenna port 1. For example, the second-type guard interval corresponding to the reference signal of antenna port 1 is used for providing a guard interval for separating the reference signal of antenna port 1 in the OTFS frame from the data signal carried in the OTFS frame and from the reference signal of antenna port 2. For example, the counts of second-type guard interval symbols corresponding to the reference signal of antenna port 1 indicated by the second parameter (N_{g}¹, M_{g}¹) in the delay domain and in the Doppler domain are N_{g}¹ and M_{g}¹, respectively, where M_{g}¹ is the total count of second-type guard interval symbols corresponding to the antenna port 1 on both sides of the reference signal of antenna port 1 in the OTFS frame along the direction of the delay domain, and N_{g}¹ is the total count of second-type guard interval symbols corresponding to the antenna port 1 on both sides of the reference signal of antenna port 1 in the OTFS frame along the direction of the Doppler domain. The second parameter (N_{g}², M_{g}²) corresponds to the reference signal of antenna port 2, and the second parameter (N_{g}², M_{g}²) is used for indicating the second-type guard interval symbol corresponding to the reference signal of antenna port 2. For example, the second type of guard interval symbol corresponding to the reference signal of antenna port 2 is used for providing a guard interval for separating the reference signal of antenna port 2 in the OTFS frame from the data signal carried in the OTFS frame and from the reference signal of antenna port 1. For example, the counts of second-type guard interval symbols corresponding to the reference signal of antenna port 2 indicated by the second parameter (N_{g}², M_{g}²) in the delay domain and in the Doppler domain are N_{g}² and M_{g}², respectively, where M_{g}² is the total count of second-type guard interval symbols corresponding to the antenna port 2 on both sides of the reference signal of antenna port 2 in the OTFS frame along the direction of the delay domain, and N_{g}² is the total count of second-type guard interval symbols corresponding to the antenna port 2 on both sides of the reference signal of antenna port 2 in the OTFS frame along the direction of the Doppler domain.

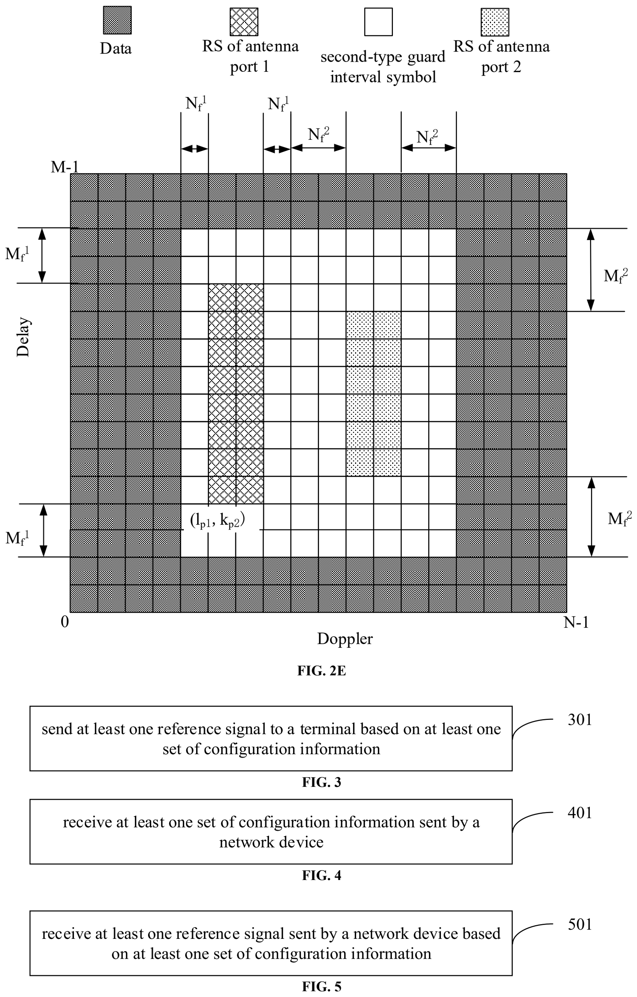

FIG. 2E is a structural diagram illustrating a second-type guard interval symbol according to an embodiment of the disclosure. As illustrated in FIG. 2E, the above-mentioned "third position information" may include two second parameters, namely, a second parameter (N_{f}¹, M_{f}¹) and a second parameter (N_{f}², M_{f}²). The second parameter (N_{f}¹, M_{f}¹) corresponds to the reference signal of antenna port 1, and the second parameter (N_{f}¹, M_{f}¹) is used for indicating the second-type guard interval symbol corresponding to the reference signal of antenna port 1. The counts of second-type guard interval symbols corresponding to the reference signal of antenna port 1 indicated by the second parameters (N_{f}¹, M_{f}¹) in the delay domain and in the Doppler domain are N_{f}¹ and M_{f}¹ respectively, where M_{f}¹ is the count of second-type guard interval symbols corresponding to the antenna port 1 on either side of the reference signal of antenna port 1 in the OTFS frame along the direction of the delay domain, and N_{f}¹ is the count of second-type guard interval symbols corresponding to the antenna port 1 on either side of the reference signal of antenna port 1 in the OTFS frame along the direction of the Doppler domain. The second parameter (N_{f}², M_{f}²) corresponds to the reference signal of antenna port 2, and the second parameter (N_{f}², M_{f}²) is used for indicating the second-type guard interval symbol corresponding to the reference signal of antenna port 2. The counts of second-type guard interval symbols corresponding to the reference signal of antenna port 2 indicated by the second parameters (N_{f}², M_{f}²) in the delay domain and in the Doppler domain are N_{f}² and M_{f}² respectively, where M_{f}² is the count of second-type guard interval symbols corresponding to the antenna port 2 on either side of the reference signal of antenna port 2 in the OTFS frame along the direction of the delay domain, and N_{f}² is the count of second-type guard interval symbols corresponding to the antenna port 2 on either side of the reference signal of antenna port 2 in the OTFS frame along the direction of the Doppler domain.

It should be noted that the above descriptions related to "the counts of guard interval symbols indicated by the first parameter and by the second parameter in the delay domain and in the Doppler domain respectively" is only an example of the disclosure. It should be understood that other methods for indicating the counts of guard interval symbols in the delay domain and the Doppler domain respectively should also be within the protection scope of the disclosure.

It may be seen from the above content that the above-mentioned "first information" may indicate positions of the reference signal and/or guard interval symbols of the reference signal in the DD domain, and the terminal may determine the transmission position of the reference signal based on the first information, such that the corresponding reference signal may be received based on the transmission position, thereby achieving successful transmission of the reference signal in the OTFS system.

For example, in some embodiments, the second information may include at least one of: sequence information, orthogonal cover code (OCC), or cyclic shift information.

The sequence parameter is used for generating a base sequence.

The OCC may be used for generating a reference signal sequence in combination with the aforementioned base sequence.

The cyclic shift information may be used for generating a reference signal sequence in combination with the aforementioned base sequence.

For example, the above-mentioned "OCC" corresponds to a case where the OCC is used for distinguishing antenna ports, and the above-mentioned "cyclic shift information" corresponds to a case where the base sequence and the cyclic shift are used for distinguishing antenna ports.

For example, in some embodiments, the network device includes the second information in the configuration information so that the terminal may determine a respective reference signal sequence corresponding to each antenna port based on the second information, and the terminal may subsequently measure the reference signal sent by the antenna port based on the respective reference signal sequence corresponding to each antenna port, thereby achieving successful measurement of the reference signal in the OTFS system.

For example, in some embodiments, the above-mentioned "the network device sending at least one set of configuration information to the terminal" may include any of:
sending multiple sets of configuration information to the terminal, where the multiple sets of configuration information is used for configuring respective reference signals of different antenna ports in the OTFS system; or
sending one set of configuration information to the terminal, where the one set of configuration information is used for configuring one or more reference signals of one or more antenna ports in the OTFS system.

For example, in some embodiments, the DD domain positions and/or the reference signal sequences corresponding to respective reference signals of different antenna ports in the OTFS system should be different, to distinguish different antenna ports. Based on this, in some embodiments, the DD domain positions and/or the sequence information configured by the configuration information for the reference signals of different antenna ports should be different, to achieve the purpose of "distinguishing different antenna ports".

For example, in some embodiments, in a case where the network device sends multiple sets of configuration information to the terminal to configure respective reference signals of different antenna ports, the multiple sets of configuration information should be different. For example, at least one of the first position information, the second position information, or the second information in the multiple sets of configuration information should be different, thereby making the DD domain positions and/or the sequence information of the reference signals configured by different sets of configuration information different, to achieve the purpose of "distinguishing different antenna ports".

For example, in some other embodiments, in a case where the network device sends one set of configuration information to the terminal to configure the reference signals of multiple antenna ports, the one set of configuration information may configure one set of DD domain positions and multiple sets of different sequence information. For example, the one set of configuration information may include one set of first position information, one set of second position information, and multiple sets of second information. The one set of first position information and the one set of second position information are used for configuring one set of DD domain positions. The one set of DD domain positions is applicable to the reference signals of all antenna ports. The multiple sets of second information are used for configuring multiple sets of different sequence information, and the multiple sets of different sequence information correspond to different antenna ports, respectively, and are used for determining reference signal sequences corresponding to different antenna ports. In this case, the DD domain positions of the reference signals of all antenna ports are the same, but the reference signal sequences are different, and different antenna ports may be distinguished in the DD domain by orthogonal codes or orthogonal sequences.

Or in other embodiments, in a case where the network device sends one set of configuration information to the terminal to configure reference signals of multiple antenna ports, the one set of configuration information may configure multiple sets of different DD domain positions and one set of sequence information. For example, the one set of configuration information may include multiple sets of first position information, multiple sets of second position information, and one set of second information. The multiple sets of first position information and the multiple sets of second position information are used for configuring multiple sets of different DD domain positions, and the multiple sets of different DD domain positions correspond to different antenna ports respectively. The one set of second information is used for configuring one set of sequence information, and the one set of sequence information is applicable to all antenna ports and is used for determining the reference signal sequence corresponding to each antenna port. In this case, the reference signal sequences of all antenna ports are the same, but the DD domain positions are different, and different antenna ports may be distinguished by different positions in the DD domain.

In addition, it should be noted that in some embodiments, in a case where the DD domain positions of the reference signals of different antenna ports configured by the configuration information sent by the network device overlap or are the same, the guard interval symbol configured by the third position information in the configuration information may be the aforementioned "first-type guard interval symbol". In other words, in the case where the DD domain positions of the reference signals of different antenna ports overlap or are the same, the reference signals of different antenna ports share the same guard interval symbols.

For example, in some embodiments, in a case where the network device configures the above configuration information to the terminal, the configuration information may be configured via a first signaling. For example, in some embodiments, the first signaling may include at least one of:
system information blocks (SIB);
radio resource control (RRC) signaling, such as UE specific RRC signaling;
media-access-control control element (MAC CE); or
downlink control information (DCI).

It should be noted that, in some embodiments, before the network device sends the configuration information to a terminal, the network device should first determine the configuration information and then send the configuration information to the terminal.

In conclusion, in the method for configuring a reference signal according to an embodiment of the disclosure, the network device sends at least one set of configuration information to the terminal, and the configuration information is used for configuring the reference signal in the OTFS system. It may be seen that the method for configuring a reference signal according to the disclosure may be used for configuring the reference signals in an MIMO-OTFS system, to realize the transmission and measurement of the reference signals in the MIMO-OTFS system, and ensure the successful execution of related measurements (such as channel quality measurement, etc.) in the MIMO-OTFS system.

FIG. 3 is a flowchart illustrating a method for configuring a reference signal according to an embodiment of the disclosure. The method is performed by a network device. As illustrated in FIG. 3, the method for configuring a reference signal may include the following.

At step 301, at least one reference signal is sent to a terminal based on the at least one set of configuration information.

For the relevant introduction about the configuration information, reference may be made to the description of the above embodiments.

For example, in some embodiments, the above-mentioned "sending the at least one reference signal to the terminal based on the at least one set of configuration information" may include sending, by the network device, at least one reference signal using at least one respective position indicated by first information in at least one set of configuration information.

In conclusion, in the method for configuring a reference signal according to an embodiment of the disclosure, the network device sends reference signal(s) to the terminal based on configuration information. The configuration information is used for configuring the reference signal in the OTFS system, and the network device also sends the configuration information to the terminal. It may be seen from the above that in the method for configuring a reference signal according to the disclosure, the network device configures the reference signal(s) by sending the configuration information to the terminal, and then the network device sends the reference signal(s) to the terminal based on the configuration information, such that the terminal may achieve successful reception of the reference signal(s) based on the configuration information received from the network device and the received reference signal(s) may be measured later, thereby ensuring that the reference signal(s) may be successfully transmitted and measured in the MIMO-OTFS system, and ensuring the successful execution of related measurements (such as channel quality measurement, etc.) in the MIMO-OTFS system.

FIG. 4 is a flowchart illustrating a method for configuring a reference signal according to an embodiment of the disclosure. The method is performed by a terminal. As illustrated in FIG. 4, the method for configuring a reference signal may include the following.

At step 401, at least one set of configuration information sent by a network device is received.

For example, the at least one set of configuration information is used for configuring at least one reference signal in the OTFS system.

For a detailed introduction to the configuration information, reference may be made to the description of the above embodiments.

In conclusion, in the method for configuring a reference signal according to an embodiment of the disclosure, the network device sends at least one set of configuration information to the terminal, and the configuration information is used for configuring the at least one reference signal in the OTFS system. It may be seen that the method for configuring a reference signal according to the disclosure may be used to configure the reference signals in the MIMO-OTFS system, to realize the transmission and measurement of the reference signals in the MIMO-OTFS system, and to ensure the successful execution of related measurements (such as channel quality measurement, etc.) in the MIMO-OTFS system.

FIG. 5 is a flowchart illustrating a method for configuring a reference signal according to an embodiment of the disclosure. The method is performed by a terminal. As illustrated in FIG. 5, the method for configuring a reference signal may include the following.

At step 501, reference signal(s) sent by a network device is/are received and measured based on configuration information.

For a detailed introduction to the configuration information, reference may be made to the description of the above embodiments.

For example, in some embodiments, the above-mentioned "receiving and measuring the reference signal(s) sent by a network device based on configuration information" may include determining, by the terminal, a corresponding transmission position for a respective reference signal of each antenna port based on the first information in the configuration information, and receives the respective reference signal of each antenna port at the corresponding transmission position. Afterwards, the terminal may determine a respective reference signal sequence corresponding to each antenna port based on the second information in the configuration information, and measure the respective reference signal of each antenna port based on the respective reference signal sequence corresponding to each antenna port.

In conclusion, in the method for configuring a reference signal according to an embodiment of the disclosure, the terminal receives and measures the reference signals sent by the network device based on the configuration information received from the network device, thereby ensuring that the reference signals may be successfully transmitted and measured in the MIMO-OTFS system, and ensuring the successful execution of related measurements (such as channel quality measurement, etc.) in the MIMO-OTFS system.

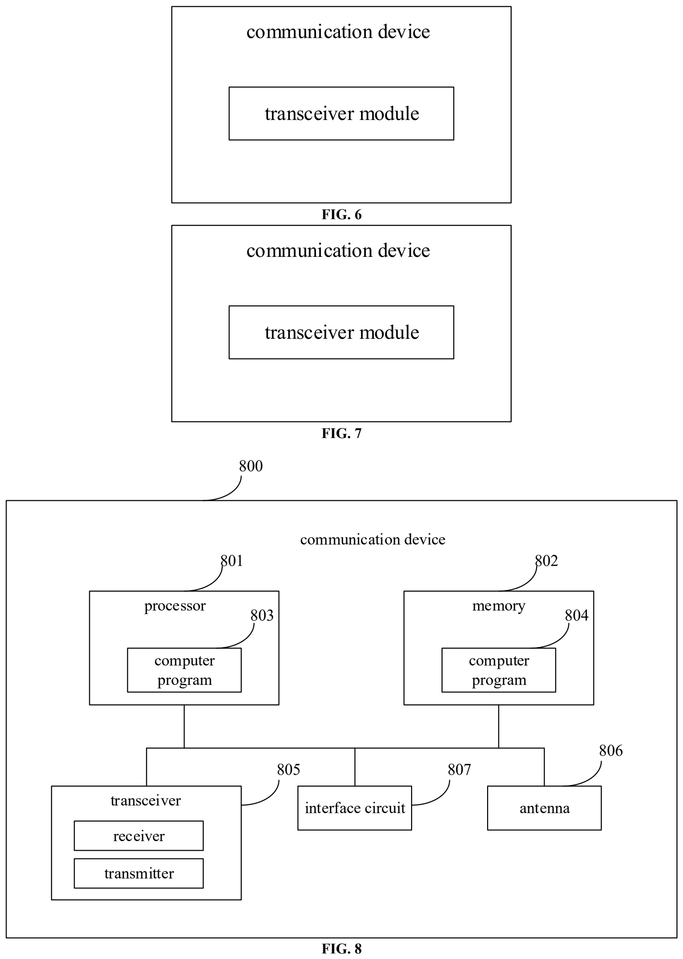

FIG. 6 is a schematic diagram illustrating the structure of a communication device according to an embodiment of the disclosure. As illustrated in FIG. 6, the device may include a transceiver module.

The transceiver module is configured to send at least one set of configuration information to the terminal. The configuration information is used for configuring at least one reference signal in an OTFS system.

In conclusion, in the communication device according to embodiments of the disclosure, the network device sends the at least one set of configuration information to the terminal, and the configuration information is used for configuring at least one reference signal in the OTFS system. It may be seen that the method for configuring the reference signal according to the disclosure may be used to configure the reference signals in the MIMO-OTFS system, to realize the transmission and measurement of the reference signals in the MIMO-OTFS system, and ensure the successful execution of related measurements (such as channel quality measurement, etc.) in the MIMO-OTFS system.

For example, in embodiments of the disclosure, the transceiver module is further configured to perform any of the following:
sending multiple sets of configuration information to the terminal, where the multiple sets of configuration information is used for configuring respective reference signals of different antenna ports in the OTFS system; or
sending one set of configuration information to the terminal, where the one set of configuration information is used for configuring one or more reference signals of one or more antenna ports in the OTFS system.

For example, in embodiments of the disclosure, the configuration information includes at least one of:
first information, where the first information is used for indicating one or more DD domain positions of one or more reference signals of one or more antenna ports;
second information, where the second information is used for indicating sequence information of one or more reference signals of one or more antenna ports, and the sequence information is used for determining a reference signal sequence corresponding to an antenna port.

For example, in embodiments of the disclosure, the first information includes at least one of:
first position information, where the first position information is used for indicating an OTFS frame where the reference signal is located;
second position information, where the second position information is used for indicating a position of the reference signal in an OTFS frame; or
third position information, where the third position information is used for indicating positions and/or the count of symbols used for a guard interval in an OTFS frame.

For example, in embodiments of the disclosure, the first position information includes a first value N and a second value M, where N and M are both integers, the first value N indicates a period between OTFS frames for carrying a reference signal, and the second value M indicates an offset value of an OTFS frame for carrying the reference signal within the period N; and/or
the first position information includes a bitmap, the bitmap includes S bits, S is a positive integer, the S bits correspond to S periodical OTFS frames respectively, and a bit value carried by a bit in the bitmap is used for indicating whether a corresponding OTFS frame is used for carrying a reference signal.

For example, in embodiments of the disclosure, the second position information includes at least one DD domain two-dimensional index, the DD domain two-dimensional index indicates a DD domain position in the OTFS frame, at least one DD domain position indicated by the at least one DD domain two-dimensional index is at least one position of the at least one reference signal in the OTFS frame; and/or
the second position information includes at least one delay domain index and at least one Doppler domain index, each delay domain index corresponds to one or more Doppler domain indexes, and/or each Doppler domain index corresponds to one or more delay domain indexes, a delay domain index and a corresponding Doppler domain index form a DD domain two-dimensional index, the DD domain two-dimensional index indicates a DD domain position in the OTFS frame, and at least one DD domain position indicated by at least one DD domain two-dimensional index formed by the at least one delay domain index and by the at least one Doppler domain index is at least one position of the at least one reference signal in the OTFS frame.

For example, in embodiments of the disclosure, the third position information includes a first parameter, the first parameter is used for indicating a first-type guard interval symbol, the first-type guard interval symbol is used for providing a guard interval between reference signals of all antenna ports carried in the OTFS frame and other signals carried in the OTFS frame; and the first parameter includes the count of first-type guard interval symbols in the delay domain and the count of first-type guard interval symbols in the Doppler domain; and/or
the third position information includes at least one second parameter, different second parameters correspond to respective reference signals of different antenna ports, the second parameter is used for indicating a second-type guard interval symbol corresponding to a respective reference signal, the second-type guard interval symbol is used for providing a guard interval between the respective reference signal of an antenna port corresponding to the second-type guard interval symbol in the OTFS frame and other signals carried in the OTFS frame; and the second parameter includes the count of second-type guard interval symbols in the delay domain and the count of second-type guard interval symbols in the Doppler domain.

For example, in embodiments of the disclosure, the second information includes at least one of:
a sequence parameter, wherein the sequence parameter is used for generating a base sequence;
an OCC, wherein the OCC is used for generating a reference signal sequence in combination with a base sequence; or
cyclic shift information, where the cyclic shift information is used for generating a reference signal sequence in combination with a base sequence.

For example, in embodiments of the disclosure, the DD domain positions and/or the sequence information configured by the configuration information for respective reference signals of different antenna ports are different.

For example, in embodiments of the disclosure, the transceiver module is further configured to:
send the at least one set of configuration information to the terminal via a first signaling.

For example, in embodiments of the disclosure, the first signaling includes at least one of:
a system information block (SIB);
a radio resource control (RRC) signaling;
a media-access-control control element (MAC CE); or
downlink control information (DCI).

For example, in embodiments of the disclosure, the device is further configured to:
send a reference signal to the terminal based on configuration information.

For example, in embodiments of the disclosure, the reference signal includes a channel state information reference signal (CSI-RS).

FIG. 7 is a schematic diagram illustrating the structure of a communication device according to an embodiment of the disclosure. As illustrated in FIG. 7, the device may include a transceiver module.

The transceiver module is configured to receive at least one set of configuration information sent by the network device. The configuration information is used for configuring at least one reference signal in an OTFS system.

In conclusion, in the communication device according to embodiments of the disclosure, the network device sends at least one set of configuration information to the terminal, and the configuration information is used for configuring the at least one reference signal in the OTFS system. It may be seen that the method for configuring the reference signal according to the disclosure may be used to configure the reference signals in the MIMO-OTFS system, to realize the transmission and measurement of the reference signals in the MIMO-OTFS system, and ensure the successful execution of related measurements (such as channel quality measurement, etc.) in the MIMO-OTFS system.

For example, in embodiments of the disclosure, the transceiver module is further configured to perform any of following operation:
receiving multiple sets of configuration information sent by a network device, where the multiple sets of configuration information is used for configuring respective reference signals of different antenna ports in an OTFS system; or
receiving one set of configuration information sent by a network device, where the one set of configuration information is used for configuring one or more reference signals of one or more antenna ports in an OTFS system.

For example, in embodiments of the disclosure, the configuration information includes at least one of:
first information, where the first information is used for indicating one or more positions of one or more reference signals of one or more antenna ports in a DD domain; or
second information, where the second information is used for indicating sequence information of one or more reference signals of one or more antenna ports, and the sequence information is used for determining a reference signal sequence corresponding to an antenna port.

For example, in embodiments of the disclosure, the first information includes at least one of
first position information, where the first position information is used for indicating an OTFS frame where a reference signal is located;
second position information, where the second position information is used for indicating a position of a reference signal in an OTFS frame; or
third position information, where the third position information is used for indicating positions and/or the count of guard interval symbols in an OTFS frame.

For example, in embodiments of the disclosure, the first position information includes a first value N and a second value M, where N and M are both integers, the first value N indicates a period between OTFS frames for carrying the reference signal, and the second value M indicates an offset value of the OTFS frame for carrying the reference signal within the period N; and/or
the first position information includes a bitmap, the bitmap includes S bits, S is a positive integer, the S bits correspond to S periodical OTFS frames respectively, and a bit value carried by a bit in the bitmap is used for indicating whether a corresponding OTFS frame is used for carrying the reference signal.

For example, in embodiments of the disclosure, the second position information includes at least one DD domain two-dimensional index, the DD domain two-dimensional index indicates a DD domain position in the OTFS frame, and at least one DD domain position indicated by the at least one DD domain two-dimensional index is at least one position of the at least one reference signal in the OTFS frame; and/or
the second position information includes at least one delay domain index and at least one Doppler domain index, each delay domain index corresponds to one or more Doppler domain indexes, and/or each Doppler domain index corresponds to one or more delay domain indexes, a delay domain index and a corresponding Doppler domain index form a DD domain two-dimensional index, the DD domain two-dimensional index indicates a DD domain position in the OTFS frame, and at least one DD domain position indicated by at least one DD domain two-dimensional index formed by the at least one delay domain index and by the at least one Doppler domain index is at least one position of the at least one reference signal in the OTFS frame.

For example, in embodiments of the disclosure, the third position information includes a first parameter, the first parameter is used for indicating a first-type guard interval symbol, the first-type guard interval symbol is used for providing a guard interval between reference signals of all antenna ports carried in the OTFS frame and other signals carried in the OTFS frame; and the first parameter includes the count of first-type guard interval symbols in the delay domain and the count of first-type guard interval symbols in the Doppler domain; and/or
the third position information includes at least one second parameter, different second parameters correspond to respective reference signals of different antenna ports, a second parameter is used for indicating a second-type guard interval symbol corresponding to a respective reference signal, the second-type guard interval symbol is used for providing a guard interval between the respective reference signal of an antenna port corresponding to the second-type guard interval symbol in the OTFS frame and other signals carried in the OTFS frame, and the second parameter includes the count of second-type guard interval symbols in the delay domain and the count of second-type guard interval symbols in the Doppler domain.

For example, in embodiments of the disclosure, the second information includes at least one of:
a sequence parameter, where the sequence parameter is used for generating a base sequence;
an OCC, where the OCC is used for generating a reference signal sequence in combination with a base sequence; or
cyclic shift information, where the cyclic shift information is used for generating a reference signal sequence in combination with a base sequence.

For example, in embodiments of the disclosure, the DD domain positions and/or the sequence information configured by the configuration information for respective reference signals of different antenna ports are different.

For example, in embodiments of the disclosure, the transceiver module is further configured to:
receive the at least one set of configuration information sent by the network device via a first signaling.

For example, in embodiments of the disclosure, the first signaling includes at least one of:
an SIB;
an RRC signaling;
a MAC CE; or
DCI.

For example, in embodiments of the disclosure, the device is further configured to:
receive and measure at least one reference signal sent by the network device based on the configuration information.

For example, in embodiments of the disclosure, the reference signal includes a CSI-RS.

FIG. 8 is a schematic diagram illustrating the structure of a communication device 800 according to an embodiment of the disclosure. The communication device 800 may be a network device, a terminal, a chip, a chip system, or a processor that supports the network device to implement the above methods, or a chip, a chip system, or a processor that supports the terminal to implement the above methods. The device may be used to implement the methods according to the above method embodiments. For the details, reference may be made to the description of the above method embodiments.

The communication device 800 may include one or more processors 801. The processor 801 may be a general-purpose processor or a dedicated processor. For example, it may be a baseband processor or a central processing unit. The baseband processor may be used to process the communication protocol and communication data, and the central processing unit may be used to control the communication device (such as a base station, a baseband chip, a terminal, a terminal chip, a DU, a CU, etc.), execute a computer program, and process the data of the computer program.

For example, the communication device 800 may further include one or more memories 802, on which a computer program 804 may be stored, and the processor 801 executes the computer program 804 to enable the communication device 800 to perform the methods according to the above method embodiments. For example, data may also be stored in the memory 802. The communication device 800 and the memory 802 may be provided separately or integrated together.

For example, the communication device 800 may further include a transceiver 805 and an antenna 806. The transceiver 805 may be referred to as a transceiver unit, a transceiver, or a transceiver circuit, and is used to implement a transceiver function. The transceiver 805 may include a receiver and a transmitter. The receiver may be referred to as a receiver machine or a receiving circuit, and is used to implement a receiving function. The transmitter may be referred to as a transmitter machine or a transmitting circuit, and is used to implement a transmitting function.

For example, the communication device 800 may further include one or more interface circuits 806. The interface circuit 806 is configured to receive code instructions and transmit the code instructions to the processor 801. The processor 801 runs the code instructions to enable the communication device 800 to perform the methods according to the above method embodiments.

In an implementation, the processor 801 may include a transceiver for implementing receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be used for reading and writing code/data, or the above-mentioned transceiver circuit, interface, or interface circuit may be used for transmitting or delivering signals.

In an implementation, the processor 801 may store a computer program 803, which runs on the processor 801 and enables the communication device 800 to perform the methods according to the above method embodiments. The computer program 803 may be fixed in the processor 801, and in this case, the processor 801 may be implemented by hardware.

In an implementation, the communication device 800 may include a circuit that may implement the functions of sending or receiving or communicating in the aforementioned method embodiments. The processor and transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, or the like. The processor and transceiver may also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), or the like.

The communication device described in the above embodiments may be a network device or a terminal, but the scope of the communication device described in the disclosure is not limited thereto, and the structure of the communication device may not be limited by FIG. 8. The communication device may be an independent device or may be part of a larger device. For example, the communication device may be:
(1) an independent IC, a chip, a chip system, or a subsystem;
(2) a set of ICs including one or more ICs, for example, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld device, a mobile unit, a vehicle-mounted device, a network device, a cloud device, an artificial intelligence device, or the like;
(6) Others.

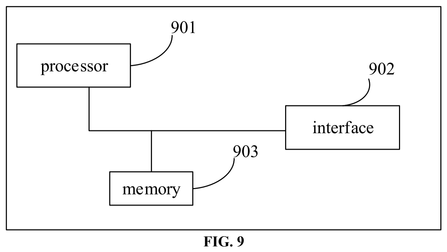

For the case where the communication device may be a chip or a chip system, FIG. 9 provides a schematic diagram of the structure of a chip. The chip illustrated in FIG. 9 includes a processor 901 and an interface 902. For example, the number of processors 901 may be one or more, and the number of interfaces 902 may be multiple.

For example, the chip further includes a memory 903. The memory 903 is configured to store necessary computer programs and data.

Those skilled in the art may also understand that the various illustrative logical blocks and steps listed in embodiments of the disclosure may be implemented by electronic hardware, computer software, or a combination of the two. Whether such functions are implemented by hardware or software depends on the specific application and the design requirements of the entire system. Those skilled in the art may use various methods to implement the functions described for each specific application, but such implementation should not be understood as exceeding the scope of protection of embodiments of the disclosure.

The disclosure also provides a readable storage medium having instructions stored thereon. When the instructions are executed by a computer, functions of any of the above method embodiments are implemented.

The disclosure also provides a computer program product. When the computer program product is executed by a computer, the functions of any of the above method embodiments are implemented.

The above embodiments may be implemented in whole or in part by software, hardware, firmware or any combination thereof. When implemented using software, the embodiments may be implemented in whole or in part in the form of a computer program product. The computer program product includes one or more computer programs. When the computer program is loaded and executed on a computer, the processes or functions described in embodiments of the disclosure are generated in whole or in part. The computer may be a general-purpose computer, a special-purpose computer, a computer network, or other programmable device. The computer program may be stored in a computer-readable storage medium, or transmitted from one computer-readable storage medium to another computer-readable storage medium. For example, the computer program may be transmitted from a website site, computer, server or data center by wired (e.g., coaxial cable, optical fiber, digital subscriber line (DSL)) or wireless (e.g., infrared, wireless, microwave, etc.) mode to another website site, computer, server or data center. The computer-readable storage medium may be any available medium that a computer may access or a data storage device such as a server or data center that includes one or more available media integrated. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

A person skilled in the art may understand that the various numerical numbers such as "first" and "second" involved in the disclosure are only used for the convenience of description and are not used to limit the scope of embodiments of the disclosure, and also indicate the order of precedence.

The term "at least one" in the disclosure may also be described as "one or more", and the term "a plurality of" may be "two", "three", "four" or more, which is not limited in the disclosure. In embodiments of the application, for a kind of technical features, these technical features are distinguished by "first", "second", "third", "A", "B", "C" and "D", etc., and there is no order of precedence or size between the technical features described by the "first", "second", "third", "A", "B", "C" and "D".

The correspondence shown in each table in the disclosure may be configured or predefined. Values of the signals in each table are only examples and may be configured as other values, which are not limited by the disclosure. In configuring the correspondence between the information and each parameter, it is not necessarily required to configure all the correspondences illustrated in each table. For example, in the table in the disclosure, the correspondences shown in some rows may not be configured. As another example, appropriate deformation adjustments may be made based on the above table, such as splitting, merging, etc. Names of the parameters shown in the titles in the above tables may also use other names that may be understood by the communication device, and the values or representations of the parameters may also be other values or representations that may be understood by the communication device. In implementing the above tables, other data structures may also be used, such as arrays, queues, containers, stacks, linear lists, pointers, linked lists, trees, graphs, structures, classes, heaps, hash lists or hash tables.

The term "predefined" in the disclosure may be understood as "defined", "predefined", "stored", "prestored", "pre-negotiated", "pre-configured", "solidified", or "pre-burned".

Those of ordinary skill in the art may appreciate that the units and algorithm steps of each example described in conjunction with embodiments of the disclosure may be implemented in electronic hardware, or a combination of computer software and electronic hardware. Whether these functions are performed in hardware or software depends on the specific application and design constraints of the technical solution. Professional and technical personnel nay use different methods to implement the described functions for each specific application, but such implementation should not be considered to be beyond the scope of the disclosure.

Those skilled in the art may clearly understand that, to the purpose of convenience and brevity of description, for the specific working processes of the systems, devices and units described above, reference may be made to the corresponding processes in the aforementioned method embodiments, which is not repeated here.

The above is only a specific implementation of the disclosure, but the protection scope of the disclosure is not limited thereto. Any person skilled in the art who is familiar with the technical field of the disclosure may easily think of changes or substitutions within the technical scope of the disclosure, which should be included in the protection scope of the disclosure. Therefore, the protection scope of the disclosure should be based on the protection scope of the claims.

## Claims

1. A method for configuring a reference signal, comprising:
sending at least one set of configuration information to a terminal, wherein the configuration information is used for configuring at least one reference signal in an orthogonal time frequency and space (OTFS) system.

2. The method of claim 1, wherein sending at least one set of configuration information to the terminal comprises any one of:
sending a plurality of sets of configuration information to the terminal, wherein the plurality of sets of configuration information are used for configuring respective reference signals of different antenna ports in the OTFS system; or
sending one set of configuration information to the terminal, wherein the one set of configuration information is used for configuring one or more reference signals of one or more antenna ports in the OTFS system.

3. The method of claim 1 or 2, wherein the configuration information comprises at least one of:
first information, wherein the first information is used for indicating one or more delay-Doppler (DD) domain positions of one or more reference signals of one or more antenna ports; or
second information, wherein the second information is used for indicating sequence information of one or more reference signals of one or more antenna ports, and the sequence information is used for determining a reference signal sequence corresponding to an antenna port.

4. The method of claim 3, wherein the first information comprises at least one of:
first position information, wherein the first position information is used for indicating an OTFS frame where a reference signal is located;
second position information, wherein the second position information is used for indicating a position of a reference signal in an OTFS frame; or
third position information, wherein the third position information is used for indicating positions and/or a count of symbols used for a guard interval in an OTFS frame.

5. The method of claim 4, wherein the first position information comprises a first value N and a second value M, N and M are both integers, the first value N indicates a period between OTFS frames for carrying the reference signal, and the second value M indicates an offset value of the OTFS frame for carrying the reference signal within the period N; and/or
the first position information comprises a bitmap, the bitmap comprises S bits, S is a positive integer, the S bits correspond to S periodical OTFS frames respectively, and a bit value carried by a bit in the bitmap is used for indicating whether a corresponding OTFS frame is used for carrying the reference signal.

6. The method of claim 4, wherein the second position information comprises at least one DD domain two-dimensional index, a DD domain two-dimensional index indicates a DD domain position in the OTFS frame, and at least one DD domain position indicated by the at least one DD domain two-dimensional index is at least one position of the reference signal in the OTFS frame; and/or
the second position information comprises at least one delay domain index and at least one Doppler domain index, each delay domain index corresponds to one or more Doppler domain indexes, and/or each Doppler domain index corresponds to one or more delay domain indexes, a delay domain index and a corresponding Doppler domain index form a DD domain two-dimensional index, the DD domain two-dimensional index indicates a DD domain position in the OTFS frame, and at least one DD domain position indicated by at least one DD domain two-dimensional index formed by the at least one delay domain index and by the at least one Doppler domain index is at least one position of the reference signal in the OTFS frame.

7. The method of claim 4, wherein the third position information comprises a first parameter, the first parameter is used for indicating a first-type guard interval symbol, the first-type guard interval symbol is used for providing a guard interval between reference signals of all antenna ports carried in the OTFS frame and other signals carried in the OTFS frame, and the first parameter comprises a count of first-type guard interval symbols in a delay domain and a count of first-type guard interval symbols in a Doppler domain; and/or
the third position information comprises at least one second parameter, different second parameters correspond to respective reference signals of different antenna ports, a second parameter is used for indicating a second-type guard interval symbol corresponding to a respective reference signal, the second-type guard interval symbol is used for providing a guard interval between the respective reference signal of an antenna port corresponding to the second-type guard interval symbol in the OTFS frame and other signals carried in the OTFS frame, and the second parameter comprises a count of second-type guard interval symbols in a delay domain and a count of second-type guard interval symbols in a Doppler domain.

8. The method of claim 3, wherein the second information comprises at least one of:
a sequence parameter, wherein the sequence parameter is used for generating a base sequence;
an orthogonal cover code (OCC), wherein the OCC is used for generating the reference signal sequence in combination with a base sequence; or
cyclic shift information, wherein the cyclic shift information is used for generating the reference signal sequence in combination with a base sequence.

9. The method of any one of claims 3 to 8, wherein DD domain positions and/or sequence information configured by the configuration information for respective reference signals of different antenna ports are different.

10. The method of any one of claims 1 to 9, wherein sending at least one set of configuration information to the terminal comprises:
sending the at least one set of configuration information to the terminal via a first signaling.

11. The method of claim 10, wherein the first signaling comprises at least one of:
a system information block (SIB);
a radio resource control (RRC) signaling;
a media-access-control control element (MAC CE); or
downlink control information (DCI).

12. The method of any one of claims 1 to 11, further comprising:
sending the at least one reference signal to the terminal based on the at least one set of configuration information.

13. The method of any one of claims 1 to 12, wherein a reference signal comprises a channel state information reference signal (CSI-RS).

14. A method for configuring a reference signal, comprising:
receiving at least one set of configuration information sent by a network device, wherein the configuration information is used for configuring at least one reference signal in an orthogonal time frequency and space (OTFS) system.

15. The method of claim 14, wherein receiving at least one set of configuration information sent by the network device comprises any one of:
receiving a plurality of sets of configuration information sent by the network device, wherein the plurality of sets of configuration information are used for configuring respective reference signals of different antenna ports in the OTFS system; or
receiving one set of configuration information sent by the network device, wherein the one set of configuration information is used for configuring one or more reference signals of one or more antenna ports in the OTFS system.

16. The method of claim 14 or 15, wherein the configuration information comprises at least one of:
first information, wherein the first information is used for indicating one or more delay-Doppler (DD) domain positions of one or more reference signals of one or more antenna ports;
second information, wherein the second information is used for indicating sequence information of one or more reference signals of one or more antenna ports, and the sequence information is used for determining a reference signal sequence corresponding to an antenna port.

17. The method of claim 16, wherein the first information comprises at least one of:
first position information, wherein the first position information is used for indicating an OTFS frame where a reference signal is located;
second position information, wherein the second position information is used for indicating a position of a reference signal in an OTFS frame; or
third position information, wherein the third position information is used for indicating positions and/or a count of symbols used for a guard interval in an OTFS frame.

18. The method of claim 17, wherein the first position information comprises a first value N and a second value M, N and M are both integers, the first value N indicates a period between OTFS frames for carrying the reference signal, and the second value M indicates an offset value of the OTFS frame for carrying the reference signal within the period N; and/or
the first position information comprises a bitmap, the bitmap comprises S bits, S is a positive integer, the S bits correspond to S periodical OTFS frames respectively, and a bit value carried by a bit in the bitmap is used for indicating whether a corresponding OTFS frame is used for carrying the reference signal.

19. The method of claim 17, wherein the second position information comprises at least one DD domain two-dimensional index, a DD domain two-dimensional index indicates a DD domain position in the OTFS frame, and at least one DD domain position indicated by the at least one DD domain two-dimensional index is at least one position of the reference signal in the OTFS frame; and/or
the second position information comprises at least one delay domain index and at least one Doppler domain index, each delay domain index corresponds to one or more Doppler domain indexes, and/or each Doppler domain index corresponds to one or more delay domain indexes, a delay domain index and a corresponding Doppler domain index form a DD domain two-dimensional index, the DD domain two-dimensional index indicates a DD domain position in the OTFS frame, and at least one DD domain position indicated by at least one DD domain two-dimensional index formed by the at least one delay domain index and by the at least one Doppler domain index is at least one position of the reference signal in the OTFS frame.

20. The method of claim 17, wherein the third position information comprises a first parameter, the first parameter is used for indicating a first-type guard interval symbol, the first-type guard interval symbol is used for providing a guard interval between reference signals of all antenna ports carried in the OTFS frame and other signals carried in the OTFS frame, and the first parameter comprises a count of first-type guard interval symbols in a delay domain and a count of first-type guard interval symbols in a Doppler domain; and/or
the third position information comprises at least one second parameter, different second parameters correspond to respective reference signals of different antenna ports, a second parameter is used for indicating a second-type guard interval symbol corresponding to a respective reference signal, the second-type guard interval symbol is used for providing a guard interval between the respective reference signal of an antenna port corresponding to the second-type guard interval symbol in the OTFS frame and other signals carried in the OTFS frame, and the second parameter comprises a count of second-type guard interval symbols in a delay domain and a count of second-type guard interval symbols in a Doppler domain.

21. The method of claim 16, wherein the second information comprises at least one of:
a sequence parameter, wherein the sequence parameter is used for generating a base sequence;
an orthogonal cover code (OCC), wherein the OCC is used for generating the reference signal sequence in combination with a base sequence; or
cyclic shift information, wherein the cyclic shift information is used for generating the reference signal sequence in combination with a base sequence.

22. The method of any one of claims 16 to 21, wherein DD domain positions and/or sequence information configured by the configuration information for respective reference signals of different antenna ports are different.

23. The method of any one of claims 14 to 22, wherein receiving at least one set of configuration information sent by the network device comprises:
receiving the at least one set of configuration information sent by the network device via a first signaling.

24. The method of claim 23, wherein the first signaling comprises at least one of:
a system information block (SIB);
a radio resource control (RRC) signaling;
a media-access-control control element (MAC CE); or
downlink control information (DCI).

25. The method of any one of claims 14 to 24, further comprising:
receiving and measuring the at least one reference signal sent by the network device based on the at least one set of configuration information.

26. The method of any one of claims 14 to 25, wherein a reference signal comprises a channel state information reference signal (CSI-RS).

27. A communication device, comprising:
a transceiver module, configured to send at least one set of configuration information to a terminal, wherein the configuration information is used for configuring at least one set reference signal in an orthogonal time frequency and space (OTFS) system.

28. A communication device, comprising:
a transceiver module, configured to receive at least one set of configuration information sent by a network device, wherein the configuration information is used for configuring at least one reference signal in an orthogonal time frequency and space (OTFS) system.

29. A communication device, comprising a processor and a memory, wherein the memory has a computer program stored therein, and the processor is configured to execute the computer program stored in the memory to enable the device to perform the method of any one of claims 1 to 13 or the method of any one of claims 14 to 26.

30. A communication device, comprising a processor and an interface circuit,
wherein the interface circuit is configured to obtain code instructions and transmit the code instructions to the processor; and
the processor is configured to execute the code instructions to perform the method of any one of claims 1 to 13 or the method of any one of claims 14 to 26.

31. A computer-readable storage medium, having instructions stored thereon, wherein when the instructions are executed, the method of any one of claims 1 to 13 or the method of any one of claims 14 to 26 is implemented.
